# EUROPÄISCHE PATENTANMELDUNG

(11) **EP 2 711 124 A1**
(43) Veröffentlichungstag der Anmeldung: **26.03.2014**
(21) Anmeldenummer: 13184944.0
(22) Anmeldetag: 18.09.2013
(51) Int. Cl.: B23Q 1/76, F16C 32/06

(54) **Selbstzentrierende Lünette**

(30) Priorität: 21.09.2012 DE 102012217001
(71) Anmelder: ADVO-Carillon UG (haftungsbeschränkt), 73760 Ostfildern (DE)
(72) Erfinder: Brandstetter, Jochen, 73230 Kirchheim-Lindorf (DE); Schöller, Felix, 70327 Stuttgart (DE); Schöller, Tobias, 73760 Ostfildern (DE)
(74) Vertreter: Kohler Schmid Möbus

(57) **Zusammenfassung**

Die Erfindung betrifft eine selbstzentrierende Lünette (1) zur Halterung eines rotierenden Werkstücks (2), umfassend: ein Gehäuse (3) sowie drei in einer gemeinsamen Ebene verstellbar gelagerte Halteglieder (4, 5, 6), die jeweils ein Kontaktelement (10, 11, 12) zur Abstützung des Werkstücks (2) aufweisen, wobei ein mittleres Halteglied (4) in Richtung auf das Werkstück (2) verschiebbar ist und wobei ein erstes und ein zweites äußeres Halteglied (5, 6) zwei seitlich in Richtung auf das Werkstück (2) verschwenkbare Hebelarme bilden. Mindestens ein Halteglied (4, 5, 6), bevorzugt alle drei Halteglieder (4, 5, 6), weisen als Kontaktelement einen Gleitschuh (10, 11, 12) mit einer gekrümmten Gleitschuhoberfläche (10a, 11a, 12a) zur hydrostatischen Lagerung des Werkstücks (2) auf. Die Erfindung betrifft auch einen Gleitschuh (10, 11, 12) für eine solche Lünette (1) sowie ein zugehöriges Verfahren.

## Beschreibung

Die vorliegende Erfindung betrifft eine selbstzentrierende Lünette zur Halterung bzw. zum Einspannen eines rotierenden Werkstücks, umfassend: ein Gehäuse sowie drei in einer gemeinsamen Ebene verstellbar gelagerte Halteglieder, die jeweils ein Kontaktelement zur Abstützung des Werkstücks aufweisen, wobei ein mittleres Halteglied in Richtung auf das Werkstück verschiebbar ist und wobei ein erstes und zweites äußeres Halteglied zwei seitlich in Richtung auf das Werkstück verschwenkbare Hebelarme bilden.

Für die Abstützung von rotierenden Werkstücken während der Bearbeitung, beispielsweise bei einem Schleifvorgang, ist es üblich, zentrierende Lünetten einzusetzen, welche das Werkstück in einem Bereich abstützen, in dem gerade keine Bearbeitung erfolgt. Diese Abstützung kann in selbstzentrierender Weise mittels dreier am Umfang des abzustützenden Werkstücks positionierbarer Kontaktelemente erfolgen. Zur Abstützung des Werkstücks wird hierbei ein erstes, mittleres Halteelement in der Art eines Zentralstößels in radialer Richtung auf das Werkstück zu bewegt und durch eine simultane Bewegung der beiden äußeren als Schwingarme dienenden Halteglieder wird das Werkstück zentrisch eingespannt.

Eine selbstzentrierende Lünette dieser Bauart ist beispielsweise in der EP 2353777 A1 beschrieben. Dort wird als Antriebseinheit für das mittlere Halteglied bzw. für ein mit der Antriebseinheit verbundenes Mittelstück ein Elektromotor eingesetzt, dessen Rotationsbewegungen in mindestens zwei unterschiedliche axiale Zustellgeschwindigkeiten des mittleren Halteglieds umwandelbar sind. An dem Mittelstück sind Steuerflächen vorgesehen, mit denen die beiden äußeren Halteglieder zusammenwirken. Eine Lünette ähnlicher Bauart, bei welcher das mittlere Halteglied durch einen mit einem Druckmittel beaufschlagbaren Betätigungskolben in Richtung auf das Werkstück verschiebbar ist, ist in der EP 0562180 A1 beschrieben. Als Kontaktelemente für selbstzentrierende Lünetten können beispielsweise Rollen, Gripper oder Pads dienen, die an dem Werkstück zur Anlage gebracht werden.

Selbstzentrierende Lünetten werden in der Regel für Werkstücke mit Durchmessern bis ca. 400 mm eingesetzt. Zur Abstützung größerer Werkstücke ist es aus der EP 2415557 A1 bekannt, eine hydrostatische Lagerung vorzunehmen, bei der zwischen einer mittleren Lagerschale bzw. einem Gleitschuh und dem Werkstück eine Hydraulikflüssigkeit eingebracht wird. Zwei weitere, äußere Schalen, welcher der Fixierung der Mitte des Werkstücks dienen, können ebenfalls ein hydrostatisches Lager aufweisen. Eine zusätzliche Schale kann zur Abstützung der oberen Werkstückhälfte dienen, wobei die Schale über ein Stellglied in Richtung des Werkstücks verstellbar und über einen Schwenkarm verschwenkbar gelagert ist.

In der DE 10 2007 031 512 A1 ist eine hydrodynamische Lünette beschrieben, welche mindestens einen das Werkstück stützenden und zentrierenden und mit einem inneren Druck beaufschlagbaren Lagerbereich aufweist. Die Lünette weist Mittel zur Zuführung von als Schmier- und/oder Kühlmittel wirkendem Fluid mit einem Fluiddruck zwischen das Werkstück und den Lagerbereich auf. In einem Ausführungsbeispiel ist die Lünette mehrteilig ausgebildet, wobei Trennstellen zwischen den als schwenkbare Backen ausgebildeten Teilen druckdicht ausgebildet sind.

### Aufgabe der Erfindung

Es ist eine Aufgabe der vorliegenden Erfindung, eine selbstzentrierende Lünette der eingangs genannten Art derart weiterzubilden, dass diese auch bei der Halterung schwerer Werkstücke nur eine geringe Lageabweichung erzeugt und keine Oberflächenveränderung und/oder -beschädigung an der abstützenden Stelle am Werkstück verursacht.

### Gegenstand der Erfindung

Diese Aufgabe wird gelöst durch eine selbstzentrierende Lünette der eingangs genannten Art, bei der mindestens ein Halteglied, bevorzugt alle drei Halteglieder, als Kontaktelement einen Gleitschuh mit einer gekrümmten Gleitschuhoberfläche zur hydrostatischen Lagerung des Werkstücks aufweisen.

Erfindungsgemäß wird vorgeschlagen, an der selbstzentrierenden Lünette an Stelle von rollenförmigen Kontaktelementen, deren Oberflächen direkt mit dem Werkstück in Kontakt kommen, eine hydrostatische Lagerung des Werkstücks vorzunehmen, d.h. zwischen dem Werkstück und dem Kontaktelement ein Hydraulikfluid einzubringen. Durch die hydrostatische Lagerung des Werkstücks an dem bzw. an den Gleitschuhen kann eine Rundlaufabweichung des Werkstücks reduziert werden. Zudem kann durch die hydrostatische Lagerung eine Beschädigung des Werkstücks (z.B. in Form von Schleifspuren) vermieden werden, wie sie bei einer direkten Anlage des Werkstücks an rollenförmigen Kontaktelementen auftreten kann.

In einer Ausführungsform ist der mindestens eine Gleitschuh um eine am zugehörigen Halteglied gebildete Drehachse verschwenkbar gelagert. Durch die Schwenkbarkeit des Gleitschuhs wird das Anstellen der Gleitschuhoberfläche, die typischer Weise einen annähernd konstanten Krümmungsradius aufweist, an das Werkstück vereinfacht. Die Drehachse kann beispielsweise durch einen an dem Halteglied vorgesehenen Bolzen gebildet werden. Eine solche Drehachse bzw. ein solcher Bolzen ist typischer Weise auch bei einer herkömmlichen selbstzentrierenden Lünette vorgesehen und dient als Lager für das rollenförmige Kontaktelement.

Bevorzugt ist der mindestens eine Gleitschuh lösbar mit dem Halteglied verbunden. Die lösbare Verbindung ermöglicht es, an der selbstzentrierenden Lünette Gleitschuhe mit unterschiedlichen Abmessungen anzubringen. Auf diese Weise können für die Halterung eines Werkstücks mit vorgegebenen Abmessungen, insbesondere mit vorgegebenem Außendurchmesser geeignet angepasste Gleitschuhe verwendet werden. Ein angepasster Gleitschuh weist eine Gleitschuhoberfläche auf, deren Krümmungsradius an den Radius des zu halternden Werkstücks angepasst ist.

Die lösbare Verbindung des Gleitschuhs mit dem Halteglied erfolgt vorteilhafter Weise im Bereich der Drehachse. Zu diesem Zweck kann beispielsweise ein die Drehachse bildender Bolzen, an welchem der Gleitschuh gelagert wird, lösbar mit dem Halteglied verbunden sein, wobei die lösbare Verbindung beispielsweise als Schraubverbindung realisiert werden kann. Zum Lösen des Gleitschuhs vom Halteglied wird in diesem Fall die Verbindung zwischen Bolzen und Halteglied gelöst.

In einer weiteren Ausführungsform weist der Gleitschuh mindestens einen Kanalabschnitt zur Versorgung mindestens einer an einer Gleitschuhoberfläche gebildeten Drucktasche mit einem Hydraulikfluid auf und das Halteglied weist mindestens einen weiteren Kanalabschnitt zur fluiddichten Verbindung mit dem Kanalabschnitt des Gleitschuhs auf. Bevorzugt erfolgt die Beaufschlagung der an dem Gleitschuh gebildeten Drucktaschen über einen Kanalabschnitt des Gleitschuhs, welcher mit einem entsprechenden Abschnitt im Halteglied in Fluidverbindung steht und welcher sich in das Gehäuse der selbstzentrierenden Lünette fortsetzt.

In einer Weiterbildung mündet der weitere Kanalabschnitt des Halteglieds in den Bereich einer am Halteglied vorgesehenen Drehachse zur Lagerung des Gleitschuhs. Wie weiter oben beschrieben wurde, ist der Gleitschuh an der Drehachse verschwenkbar gelagert, so dass die Zuführung des Hydraulikfluids an der Drehachse auf besonders einfache Weise erfolgen kann, beispielsweise indem der Kanalabschnitt in dem Gleitschuh über einen Ringraum zwischen einem die Drehachse bildenden Bolzen und dem Halteglied mit dem weiteren Kanalabschnitt des Halteglieds verbunden wird. Auf diese Weise kann für die Zuführung des Hydraulikfluids ein Kanal bzw. ein Kanalabschnitt einer herkömmlichen selbstzentrierenden Lünette dienen, welcher der Zuführung eines Schmiermittels zu einer Schmierstelle für ein rollenförmiges Kontaktelement dient.

In einer weiteren Weiterbildung weist das Gehäuse mindestens einen Zuführungskanal zur Zuführung von Hydraulikfluid zu mindestens einem Halteglied auf. Die Zuführung des Hydraulikfluids kann beispielsweise über einen an der Außenseite des Gehäuses vorgesehenen Hydraulikanschluss erfolgen, der mit einer externen Druckquelle zur Bereitstellung des mit einem Druck beaufschlagten Hydraulikfluids verbindbar ist.

In einer Weiterbildung münden die Zuführungskanäle für zwei oder mehr Halteglieder in einer gemeinsamen Druckleitung. Die gemeinsame Druckleitung kann in dem Gehäuse untergebracht werden oder ggf. als zusätzliches Bauteil an der Außenseite des Gehäuses aufgesetzt werden. Mit Hilfe der gemeinsamen Druckleitung können die Gleitschuhe von zwei oder mehr Haltegliedern über einen gemeinsamen Hydraulikanschluss mit einer externen Druckquelle verbunden werden. Auf diese Weise können die mit der Druckleitung in Verbindung stehenden Drucktaschen mit dem gleichen Fluiddruck beaufschlagt werden. Es versteht sich, dass auch zwei oder mehr Hyrdaulik-Anschlüsse am Gehäuse vorgesehen werden können, die ggf. mit unterschiedlichen Druckquellen verbunden werden, um an den Drucktaschen einen jeweils unterschiedlichen Fluiddruck zu erzeugen. Sind an einem Gleitschuh zwei oder mehr Drucktaschen gebildet, können ggf. auch zwei oder mehr fluiddicht voneinander getrennte Zuführungen für ein Hydraulikfluid vorgesehen werden.

Ein weiterer Aspekt der Erfindung betrifft einen Gleitschuh für eine selbstzentrierende Lünette, die wie oben beschrieben ausgebildet ist, umfassend: eine gekrümmte Gleitschuhoberfläche mit mindestens einer Drucktasche, mindestens einen Kanalabschnitt zur Versorgung der Drucktasche mit einem Hydraulikfluid, sowie einen Verbindungsabschnitt zur lösbaren Verbindung des Gleitschuhs mit einem Halteglied der selbstzentrierenden Lünette. Der Verbindungsabschnitt kann beispielsweise eine durchgehende Bohrung aufweisen, die zur Aufnahme eines am Halteglied vorgesehenen Bolzens ausgebildet ist. Es versteht sich, dass auch andere Möglichkeiten für die Realisierung des Verbindungsabschnitts bestehen. Es versteht sich ebenfalls, dass eine Mehrzahl von Gleitschuhen mit unterschiedlichen Abmessungen, insbesondere mit unterschiedlichen Krümmungsradien der Gleitschuhoberfläche, bereitgestellt werden können, die einen identisch ausgebildeten Verbindungsabschnitt aufweisen. In Abhängigkeit von den Abmessungen des zu halternden Werkstücks können in diesem Fall geeignete Gleitschuhe ausgewählt und an der Lünette festgelegt werden.

Ein weiterer Aspekt der Erfindung betrifft ein Verfahren zum Umrüsten einer selbstzentrierenden Lünette, die wie in der Beschreibungseinleitung ausgebildet ist, für die hydrostatische Lagerung eines Werkstücks, das Verfahren umfassend: Austauschen mindestens eines rollenförmigen Kontaktelements, welches lösbar mit dem zugehörigen Halteglied verbunden ist, gegen einen hydrostatischen Gleitschuh. Bei dem Verfahren wird eine herkömmliche selbstzentrierende Lünette umgerüstet, indem die herkömmlichen, in der Regel rollenförmigen Kontaktelemente gegen hydrostatische Gleitschuhe ausgetauscht werden. Hierbei kann ausgenützt werden, dass die selbstzentrierende Lünette eine Schmiermittelzuführung zu den Haltegliedern bzw. zu den rollenförmigen Kontaktelementen aufweist, die genutzt werden kann, um den Drucktaschen des Gleitschuhs ein Hydraulikfluid zuzuführen. Gegebenenfalls sind an der Lünette, genauer gesagt an der Schmiermittelzuführung, Modifikationen erforderlich, um die Zuführung des Hydraulikfluids zu ermöglichen. Alternativ zur Verwendung einer herkömmlichen Lünette für die hydrostatische Lagerung des Werkstücks kann selbstverständlich auch eine Lünette verwendet werden, die speziell für die Erzeugung einer hydrostatischen Lagerung konzipiert ist. An einer solchen Lünette können ggf. auch rollenförmige Kontaktelemente angebracht werden, wobei die Zuführung für das Hydraulikfluid als Schmiermittelzuführung genutzt werden kann.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschlie-ßende Aufzählung zu verstehen, sondern haben vielmehr beispielhaften Charakter für die Schilderung der Erfindung.

Es zeigen:
- Fig. 1a,b: eine Seitenansicht und eine perspektivische Darstellung einer selbstzentrierenden Lünette mit Kontaktelementen in Form von Stützrollen, sowie
- Fig. 2a,b: eine Seitenansicht und eine perspektivische Darstellung einer selbstzentrierenden Lünette mit Kontaktelementen in Form von Gleitschuhen.

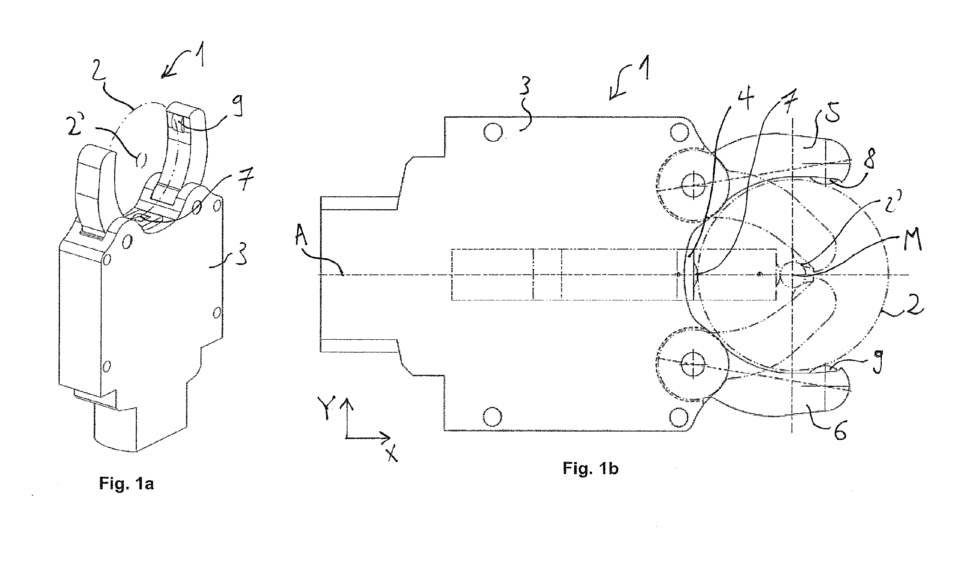

Fig. 1a,b zeigen eine herkömmliche selbstzentrierende Lünette 1 zur Halterung bzw. zum Einspannen eines rohrförmigen Werkstücks 2, dessen kreisförmiger Außenumfang in Fig. 1 a,b gestrichelt dargestellt ist. Die Lünette 1 weist ein Gehäuse 3 sowie drei Halteglieder 4, 5, 6 auf, die zur Halterung des Werkstücks 2 an seinem Außenumfang in einer gemeinsamen Ebene verstellbar sind, welche mit der Zeichenebene (XY-Ebene) von Fig. 1 b übereinstimmt. Die drei Halteglieder 4, 5, 6 umgreifen hierbei das Werkstück 2, so dass dieses an drei Kontaktelementen 7, 8, 9 in Form von Stützrollen anliegt, die eine auf das Werkstück 2 wirkende Kraft ausüben, um dieses bei der Bearbeitung in Bezug auf ein Spannzentrum M zentrisch zu spannen.

Das erste, mittlere Halteglied 4 ist entlang einer zentralen Achse A der Lünette 1 im Gehäuse 3 geführt und in Richtung auf das Werkstück 2 verschiebbar. Zur Erzeugung der Verschiebebewegung steht das mittlere Halteglied 4 mit einer (nicht gezeigten) Antriebseinheit in Verbindung. Als Antriebseinheit kann beispielsweise ein Druckkolben dienen, der auf ein mit dem mittleren Halteglied 4 trieblich verbundenes Bauteil einwirkt, wie dies in der EP 0 562 180 A1 beschrieben ist. Das Zurückziehen des mittleren Halteglieds 4 vom Werkstück 2 kann ebenfalls mit Hilfe des Druckkolbens erfolgen. Es versteht sich, dass das mittlere Halteglied 4 auch auf andere Weise angetrieben werden kann, beispielsweise mit Hilfe eines Elektromotors.

Das erste und zweite äußere Halteglied 5, 6 bilden zwei Hebelarme, welche seitlich in Richtung auf das Werkstück 2 verschwenkbar sind und dieses umgreifen. Im vorliegenden Beispiel sind die äußeren Halteglieder 5, 6 bezüglich der das Spannzentrum M enthaltenden zentralen Achse A spiegelbildlich angeordnet. Die äußeren Halteglieder 5, 6 sind in dem Gehäuse 3 abgestützt. Um eine synchronisierte Bewegung der Halteglieder 4, 5, 6 zu erreichen, ist die Bewegung der äußeren Halteglieder 5, 6 mit der Bewegung des mittleren Halteglieds 4 gekoppelt. Die Kopplung der äußeren Halteglieder 5, 6 kann über Steuerflächen oder über eine Steuerkurve erfolgen, beispielsweise wie dies in der EP 0 562 180 A1 beschrieben ist. Gegebenenfalls können für die Rückstellbewegung der äußeren Halteglieder 5, 6 Rückstellfedern in dem Gehäuse 3 vorgesehen sein.

Die in Fig. 1a,b gezeigte selbstzentrierende Lünette 1 ermöglicht es, Werkstücke 2 mit stark unterschiedlichem Durchmesser zu haltern bzw. einzuspannen. Zu diesem Zweck wird die Wegstrecke, welche das mittlere Halteglied 4 in Richtung auf das Werkstück 2 zurücklegt, entsprechend angepasst. Durch die Bewegungskopplung werden auch die äußeren Halteglieder 5, 6 weiter zur zentralen Achse A hin verschwenkt, so dass auch ein in Fig. 1a,b gezeigtes Werkstück 2' mit erheblich geringerem Außendurchmesser an der selbstzentrierenden Lünette 1 gehaltert werden kann, wie dies in Fig. 1 b gestrichelt angedeutet ist.

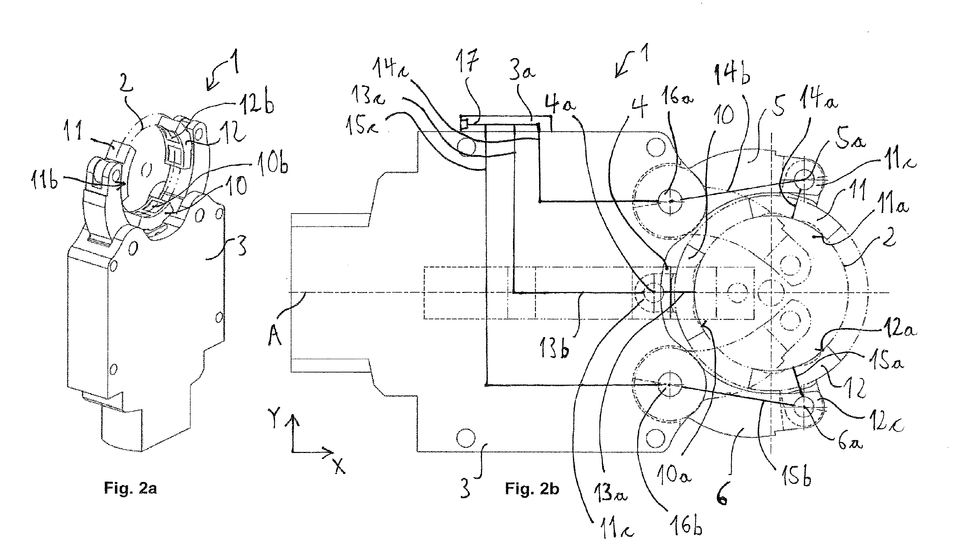

Insbesondere bei Werkstücken 2, welche ein hohes Gewicht aufweisen bzw. bei Werkstücken 2, welche bei der Rotationsbewegung um das Spannzentrum M große Kräfte auf die Kontaktelemente 7, 8, 9 ausüben, ist die Verwendung der rollenförmigen Kontaktelemente 7, 8, 9 nicht optimal. Um bei derartigen Werkstücken 2 eine Rundlaufabweichung zu reduzieren, kann eine Lünette 1 eingesetzt werden, bei der die Rollen von Fig. 1 a,b durch Kontaktelemente in Form von Gleitschuhen 10, 11, 12 ersetzt sind, wie dies in **Fig. 2a****,b** dargestellt ist. Die Gleitschuhe 10, 11, 12 weisen eine Gleitschuhoberfläche 10a, 11 a, 12a mit im Wesentlichen konstantem Krümmungsradius auf, der an den Außendurchmesser des Werkstücks 2 angepasst ist, so dass die Gleitschuhe 10, 11, 12 als Lagerschalen für das Werkstück 2 dienen können.

Zur hydrostatischen Lagerung des Werkstücks 2 an den Gleitschuhen 10, 11, 12 sind an der Gleitschuhoberfläche 10a, 11 a, 12a jeweils zwei Drucktaschen 10b, 11 b, 12b (vgl. Fig. 2a) gebildet, die mit einem Druckmedium in Form eines Hydraulikfluids beaufschlagt werden, um zwischen der Gleitschuhoberfläche 10a, 11a, 12a und dem Werkstück 2 einen Schmierfilm auszubilden. Es versteht sich, dass an einer jeweiligen Gleitschuhoberfläche 10a, 11a, 12a auch eine größere oder kleinere Anzahl von Drucktaschen 10b, 11b, 12b vorgesehen werden kann.

Für die Beaufschlagung einer jeweiligen Drucktasche 10b, 11 b, 12b mit dem Hydraulikfluid ist jeweils ein Kanalabschnitt 13a, 14a, 15a in Form einer Bohrung an den Gleitschuhen 10, 11, 12 gebildet, welcher die jeweilige Drucktasche 10b, 11b, 12b mit der Innenseite eines ringförmigen Verbindungsabschnitts 10c, 11 c, 12c verbindet. Durch eine Durchgangsbohrung des ringförmigen Verbindungsabschnitts 10c, 11c, 12c verläuft ein an dem jeweiligen Halteglied 4, 5, 6 befestigter Bolzen. Der Bolzen bildet eine Drehachse 4a, 5a, 6a, an der ein jeweiliger Gleitschuh 10, 11, 12 drehbar gelagert ist. Ein weiterer Kanalabschnitt 13b, 14b, 15b, welcher in den Bereich der Drehachse 4a, 5a, 6a, genauer gesagt in einen zwischen dem Bolzen und dem Verbindungsabschnitt 10c, 11 c, 12c gebildeten Ringraum mündet, ist mit dem Kanalabschnitt 13a, 14a, 15a des Gleitschuhs 10, 11, 12 fluiddicht verbunden.

An die weiteren Kanalabschnitte 13a, 14a, 15a der Halteglieder 4, 5, 6 schließen sich in dem Gehäuse 3 gebildete Zuführungskanäle 13c, 14c, 15c an, die fluiddicht mit den weiteren Kanalabschnitten 13a, 14a, 15a in Verbindung stehen. Die Zuführungskanäle 14c, 15c zu den äußeren Haltegliedern 5, 6 münden an zwei Gelenkbolzen 16a, 16b, an denen die äußeren Halteglieder 5, 6 schwenkbar gelagert sind.

Wie in Fig. 2b zu erkennen ist, führen die Zuführungskanäle 13c, 14c, 15c zu einem jeweiligen Hydraulik-Anschluss an der Außenseite des Gehäuses 3. Im dargestellten Beispiel sind die drei Hydraulik-Anschlüsse über eine gemeinsame Druckleitung 17 miteinander verbunden, die in einem angeflanschten Gehäuseabschnitt 3a untergebracht ist. Auf diese Weise können alle drei Zuführungskanäle 13c, 14c, 15c über einen einzigen, gemeinsamen Hydraulik-Anschluss druckbeaufschlagt werden.

Es versteht sich, dass ggf. auf den Gehäuseabschnitt 3a bzw. auf eine gemeinsame Druckleitung 17 verzichtet werden kann, um die drei Zuführungskanäle 13c, 14c, 15c individuell mit einer Druckquelle oder ggf. mit mehreren unterschiedlichen Druckquellen zu verbinden. Es versteht sich ebenfalls, dass bei der Zuführung des Hydraulikfluids (z.B. in Form von Hydraulik-Öl) zu den Drucktaschen 10b, 11 b, 12b der Druck über (nicht dargestellte) Drosseln auf ein gewünschtes Niveau reduziert werden kann.

Für die oben beschriebene Zuführung des Hydraulikfluids zu den Drucktaschen 10b, 11b, 12b kann eine selbstzentrierende Lünette 1, wie sie in Fig. 1a,b dargestellt ist, modifiziert werden, indem entsprechende Zuführungskanäle 13c, 14c, 15c bzw. Kanalabschnitte 13b, 14b, 15b im Gehäuse 3 bzw. in den Haltegliedern 4, 5, 6 angebracht werden. Häufig weist eine herkömmliche selbstzentrierende Lünette 1 zur Schmierung der Gelenkbolzen 16a, 16b sowie der die Drehachsen 4a, 5a, 6a bildenden Bolzen an den Haltegliedern 4, 5, 6 bereits eine Zuführung für ein Schmiermittel auf. Ist eine solche Schmiermittelzuführung geeignet ausgelegt und kann der für die hydrostatische Lagerung benötigte vergleichsweise hohen Druckbelastung standhalten, kann eine solche Schmiermittelzuführung ggf. auch ohne Modifikationen für die Zuführung des Hydraulikfluids zu den Drucktaschen 10b, 11 b, 12b genutzt werden.

In diesem Fall ist es zur Herstellung der in Fig. 2a,b gezeigten Lünette 1 ausreichend, wenn die rollenförmigen Kontaktelemente 7, 8, 9 von Fig. 1 a,b gegen die Gleitschuhe 10, 11, 12 ausgetauscht werden. Für den Austausch werden die Bolzen an den Haltegliedern 4, 5, 6 gelöst, die rollenförmigen Kontaktelemente 7, 8, 9 entnommen und durch die Gleitschuhe 10, 11, 12 ersetzt. Zur hydrostatischen Lagerung des Werkstücks 2 wird während der Werkstück-Bearbeitung an Stelle eines Schmiermittels ein Hydraulikfluid durch die Schmiermittelzuführung geleitet.

Wie in Fig. 2b zu erkennen ist, sind die Gleitschuhe 10, 11, 12 nur zur Halterung bzw. zum Einspannen eines Werkstücks 2 mit einem vorgegebenen Durchmesser bzw. mit geringfügigen Abweichungen von dem vorgegebenen Durchmesser geeignet. Die Halterung sehr kleiner Werkstücke 2', wie sie mit den rollenförmigen Kontaktelementen 7, 8, 9 von Fig. 1 a,b möglich ist, kann mit den in Fig. 2b gezeigten Gleitschuhen 10, 11, 12 nicht erfolgen. Es ist daher günstig, unterschiedliche Sätze von Gleitschuhen 10, 11, 12 vorzuhalten, die wahlweise an den Haltegliedern 4, 5, 6 festgelegt werden können, wobei ein geeigneter Typ von Gleitschuhen 10, 11, 12 in Abhängigkeit von den Abmessungen des Werkstücks 2 ausgewählt wird. Die unterschiedlichen Typen von Gleitschuhen 10, 11, 12 können sich insbesondere durch den Krümmungsradius der jeweiligen Gleitschuhoberfläche 10a, 11 a, 12a sowie durch die Abmessung der Gleitschuhoberfläche 10a, 11a, 12a voneinander unterscheiden. Es ist günstig, wenn auch die der Gleitschuhoberfläche 10a, 11a, 12a mit den Drucktaschen 10b, 11 b, 12b gegenüber liegende Oberfläche des Gleitschuhs 10, 11, 12 eine konstante Krümmung aufweist, wie in Fig. 2b gezeigt ist.

Bei der in Fig. 2a,b gezeigten selbstzentrierenden Lünette 1 können die Gleitschuhe 10, 11, 12 gegen rollenförmige Kontaktelemente 7, 8, 9 ausgetauscht werden. Dies kann beispielsweise gewünscht sein, um ein mehrmaliges Umrüsten der Gleitschuhe 10, 11, 12 zu vermeiden, wenn nacheinander mehrere Werkstücke mit stark unterschiedlichem Werkstückdurchmesser bearbeitet werden sollen.

## Patentansprüche

1. Selbstzentrierende Lünette (1) zur Halterung eines rotierenden Werkstücks (2), umfassend:
ein Gehäuse (3),
drei in einer gemeinsamen Ebene verstellbar gelagerte Halteglieder (4, 5, 6), die jeweils ein Kontaktelement (7, 8, 9; 10, 11, 12) zur Abstützung des Werkstücks (2) aufweisen,
wobei ein mittleres Halteglied (4) in Richtung auf das Werkstück (2) verschiebbar ist und wobei ein erstes und ein zweites äußeres Halteglied (5, 6) zwei seitlich in Richtung auf das Werkstück (2) verschwenkbare Hebelarme bilden,
**dadurch gekennzeichnet,**
**dass** mindestens ein Halteglied (4, 5, 6), bevorzugt alle drei Halteglieder (4, 5, 6),
als Kontaktelement einen Gleitschuh (10, 11, 12) mit einer gekrümmten Gleitschuhoberfläche (10a, 11a, 12a) zur hydrostatischen Lagerung des Werkstücks (2) aufweisen.

2. Lünette nach Anspruch 1, bei welcher der mindestens eine Gleitschuh (10, 11, 12) um eine am zugehörigen Halteglied (4, 5, 6) gebildete Drehachse (4a, 5a, 6a) verschwenkbar gelagert ist.

3. Lünette nach Anspruch 1 oder 2, bei welcher der mindestens eine Gleitschuh (10, 11, 12) lösbar mit dem zugehörigen Halteglied (4, 5, 6) verbunden ist.

4. Lünette nach einem der vorhergehenden Ansprüche, bei welcher der Gleitschuh (10, 11, 12) mindestens einen Kanalabschnitt (13a, 14a, 15a) zur Versorgung mindestens einer an einer Gleitschuhoberfläche (10a, 11a, 12a) gebildeten Drucktasche (10b, 11b, 12b) mit einem Hydraulikfluid aufweist und bei welcher das Halteglied (4, 5, 6) mindestens einen weiteren Kanalabschnitt (13b, 14b, 15b) zur fluiddichten Verbindung mit dem Kanalabschnitt (13a, 14a, 15a) des Gleitschuhs (10, 11, 12) aufweist.

5. Lünette nach Anspruch 4, bei welcher der weitere Kanalabschnitt (13b, 14b, 15b) des Halteglieds (4, 5, 6) in den Bereich einer am Halteglied (4, 5, 6) vorgesehenen Drehachse (4a, 5a, 6a) für die Lagerung des Gleitschuhs (10, 11, 12) mündet.

6. Lünette nach einem der vorhergehenden Ansprüche, bei welcher das Gehäuse (3) mindestens einen Zuführungskanal (13c, 14c, 15c) zur Zuführung von Hydraulikfluid zu mindestens einem der Halteglieder (4, 5, 6) aufweist.

7. Lünette nach Anspruch 6, bei welcher die Zuführungskanäle (13c, 14c, 15c) für zwei oder mehr der Halteglieder (4, 5, 6) in einer gemeinsamen Druckleitung (17) münden.

8. Gleitschuh (10, 11, 12) für eine selbstzentrierende Lünette (1) nach einem der vorhergehenden Ansprüche, umfassend:
eine gekrümmte Gleitschuhoberfläche (10a, 11a, 12a) mit mindestens einer Drucktasche (10b, 11b, 12b), mindestens einen Kanalabschnitt (13a, 14a, 15a) zur Versorgung der Drucktasche (10b, 11 b, 12b) mit einem Hydraulikfluid,
sowie einen Verbindungsabschnitt (10c, 11 c, 12c) zur lösbaren Verbindung des Gleitschuhs (10, 11, 12) mit einem Halteglied (4, 5, 6) der selbstzentrierenden Lünette (1).

9. Verfahren zum Umrüsten einer selbstzentrierenden Lünette (1) gemäß dem Oberbegriff von Anspruch 1 für die hydrostatische Lagerung eines Werkstücks (2), das Verfahren umfassend:
Austauschen mindestens eines rollenförmigen Kontaktelements (7, 8, 9), welches lösbar mit dem zugehörigen Halteglied (4, 5, 6) verbunden ist, gegen einen Gleitschuh (10, 11, 12).
